(19) Europäisches Patentamt
European Patent Office
Office européen des brevets

(11) **EP 4 245 112 A1**

(12) **EUROPEAN PATENT APPLICATION**

(43) Date of publication:
**20.09.2023   Bulletin 2023/38**

(21) Application number: **22161884.6**

(22) Date of filing: **14.03.2022**

(51) International Patent Classification (IPC):
***A01C 21/00*** (2006.01)

(52) Cooperative Patent Classification (CPC):
**A01C 21/007**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Yara International ASA**
**0277 Oslo (NO)**

(72) Inventors:
• **Jasper, Jörg**
  **48249 Dülmen (DE)**
• **Harriman, Miles**
  **Grimsby, DN37 9TZ (GB)**

(74) Representative: **AWA Sweden AB**
**P.O. Box 11394**
**404 28 Göteborg (SE)**

(54) **METHOD AND SYSTEM FOR PROVIDING MEASUREMENT REGIONS FOR PROVIDING A FERTILIZER RECOMMENDATION**

(57)    System and method for providing at least one first and at least one second measurement region for carrying out a measurement of a crop nutrient content for providing a fertilizer recommendation by means of remote spectral data. Different embodiments for determination of the measurement regions regarding specific locations and field conditions are disclosed.

Fig. 4a

EP 4 245 112 A1

## Description

### Technical field

The present disclosure relates to a system and method for determining a crop nutrition status and providing measurement regions for providing a fertilizer recommendation.

### Background

Determining the appropriate amount of fertilizer a crop needs is one of the most important decisions a farmer will encounter. A deficit in nitrogen will reduce yield, while an excess will produce economic losses and damage the environment. A deficit in other nutrients will lead to crop defects and reduced crop quality. Crops, however, present an in-field variability due to the variance in parameters which influence the growth and development of a crop (water, soil properties) and is therefore cumbersome to establish a fertilizer recommendation which might suit the whole crop at optimum levels.

Handheld devices for direct measurement of crop nitrogen levels are well known in the prior art. Some of these devices usually determine the chlorophyll (directly related to nitrogen content) by means of optical measurements. However, these devices can only determine the plant status of a single plant each time, therefore rendering the determination of variable rate application of fertilizers difficult. While there are several approaches for non-direct determination of the nitrogen content in plants (N-Sensor®, Greenseeker®), wherein the sensing devices are integrated in agricultural machines which can be transported continuously over the field, reaching a full determination of the crop status over the whole field, these solutions are expensive and therefore not widely available for the average farmer. Hence a low-cost approach is needed which enables local sensing by means of handheld devices which takes into account the variable crop nutrition status over a whole field.

### Prior Art

US 7,746,452 B2 shows a device for measuring a plant chlorophyll, nitrogen and water levels, comprising a PDA which allows the determination of the measurement location. However, the approach in US 7,746,452 B2 merely registers and displays the location data to the user to spot differences in results (e.g. for a shaded hillside).

US 10,175,215 B2 discloses a different detecting device but a similar approach regarding the usage of GPS data. It merely highlights the advantages for spatiotemporal mapping, tracking and analysis of the results for further processing after the measurements have been carried out.

Several other devices like the SPAD meter (produced by Minolta) or the N-Tester® of Yara International ASA have been successfully used for nitrogen recommendations. The SPAD-502Plus by Konica Minolta is a portable measuring device for chlorophyll content of leaves. SPAD-502Plus determines the relative amount of chlorophyll present by measuring the absorbance of the leaf in two wavelength regions using two LED (light emitting diode) elements and one silicone photodiode.

### Summary

The prior art forces the user or farmer to take a big number of measurements in order to cover differences within the agricultural field and get a reliable representation of the field average in a time-intensive manner. On the other hand, if the user or farmer does not have the time to carry out all those measurements needed to ensure that the measurements are representative of the true crop nutrient content despite the possible in-field variability, this can cause the discussed systems to only provide a local measurement which can be representative of a single plant, but not of the whole field. In worst case scenario, if only a few measurements could be provided, and the location where the measurements were taken at has a crop nitrogen content far away from the average crop nutrient content of the rest of the crop, a wrong nutrient recommendation will be produced for the whole crop, therefore causing losses and possible contamination.

Usual approaches would turn a specific area of the agricultural field into N-rich bands or sectors by overfertilizing said specific area. This area would then represent the maximum growth when no nutrient deficiency is present. Achieving this requires however voluntary waste of fertilizer in order to overfertilize the specific area. Further, the area designated as said specific area might have other issues which condition the crop growth which can go unaccounted for by a mere random selection of said specific areas.

Moreover, while said specific areas are convenient for agricultural machinery able of scanning a whole field of a certain dimensions, average farmers usually lack said agricultural machinery and therefore a more flexible approach is required which conveniently selects a plurality of measurement regions within the agricultural field which best match the users needs and avoids the waste of fertilizer. Further, aiming for a directed measurement of the crop nutrient content, the need of calibration for different crops and locations is eliminated.

The current disclosure aims at providing solutions for the problems which the use of such a handheld crop nutrient measurement device entail. While direct readings offer the advantage of precision, it is cumbersome to determine a reliable representation of the crop status, since it would involve a great amount of measuring points.

According to a first aspect of the present disclosure, this and other objectives are achieved by a computer-implemented method for determining at least one first and at least one second measurement region for carrying out at least one measurement in each region with a crop nutrient detection device for providing a fertilizer recommendation to a crop, wherein the method comprises determining at least a portion of an agricultural field comprising the crop for which the recommendation is intended; receiving data, wherein receiving data comprises receiving remote spectral data from at least a plurality of wavelengths of the agricultural field, and the method further comprises the steps of processing the remote spectral data to obtain at least one coefficient indicative of a crop status within the agricultural field, determining the at least one first and at least one second measurement regions within the agricultural field for carrying out the at least one measurement based on the at least one coefficient or a combination thereof, wherein the at least one first measurement region is selected amongst the areas of the agricultural field wherein the at least one coefficient is within a first predetermined threshold from a first predetermined value of the coefficient in the agricultural field; wherein the at least one second measurement region is selected amongst the areas of the agricultural field wherein the at least one coefficient is within a second predetermined threshold from a second predetermined value of the coefficient in the agricultural field.

Following this approach, farmers are directed to suitable measurement regions which allow a reliable determination of the crop nutrient status.

According to a second aspect of the present disclosure, the method further comprises determining the at least one first and at least one second measurement based on at least one distance and/or location parameter.

According to a third aspect of the present disclosure, the method further comprises choosing the at least one first and at least one second measurement regions such that the distance between the first and second measurement regions is within a predetermined threshold.

Following these approaches, the different at least one first and at least one second measurement regions are conveniently located.

According to a further aspect of the present disclosure, the method further comprises choosing the at least one first and at least one second measurement regions such that the distance from the first measurement region to a first predetermined location and the distance from the second measurement region to the first predetermined location are within a predetermined first threshold.

Following this approach, the at least one first and at least one second measurement regions can be located nearby specific predetermined location.

According to a further aspect of the present disclosure, the method further comprises choosing the at least one first and at least one second measurement regions such that the distance from the first measurement region to a first predetermined location and the distance from the second measurement region to a second predetermined location are within a predetermined first and/or second threshold.

Following this approach, different specific locations for the determination of the measurement regions can be considered.

According to a further aspect of the present disclosure, the method further comprises the at least one first and/or the at least one second predetermined locations being at least one of the following: a position predetermined by the users, a position within a track on the agricultural field, a boundary region of the agricultural field, the position of the farmer, the position of a sensor in the agricultural field, the position of a scheduled task on the agricultural field, a previous sampling position on the agricultural field, and an entrance gate to the agricultural field.

Following this approach, specific conditions of the field and/or the location of the farmers can be considered for an improved determination of the measurement regions.

According to a further aspect of the present disclosure, the method further comprises receiving at least a first crop nutrient content and at least a second crop nutrient content from the at least one first and at least one second measurement regions and the method further comprises determining a fertilizer recommendation based on the at least one first and at least one second crop nutrient content.

Following this approach, a fertilizer recommendation can be generated taking into consideration the suitable measurement regions.

According to a further aspect of the present disclosure, the fertilization recommendation is further adjusted based on the absolute value of the first or the second crop nutrient content.

Following this approach, an improved fertilizer recommendation can be achieved.

According to a further aspect of the present disclosure, the method further comprises carrying out the fertilizer recommendation by means of any suitable agricultural machinery.

Following this approach, the fertilizer recommendation can be carried out automatically.

According to a further aspect of the present disclosure, the method further comprises the first predetermined value being a value representative of the maximum value of the at least one coefficient or combination thereof and the second predetermined value may be a value representative of the median, average or any other measure of central tendency of the coefficient.

Following this approach, a direct method for determining a fertilizer recommendation without the need of calibration data for specific crops and/or locations is achieved.

According to a further embodiment, the fertilizer recommendation is determined based on the ratio of the first crop nutrient content and the second crop nutrient content.

Following this approach, the fertilizer recommendation can be improved by the direct determination of the crop nutrient content in the above-mentioned locations and the specific relation of the fertilizer recommendation to their ratio.

According to a further aspect of the present disclosure, the method further comprises the first predetermined value being a value representative of the minimum value of the at least one coefficient or combination thereof and the second predetermined value may be a value representative of the median, average or any other measure of central tendency of the coefficient.

Following this approach, the fertilizer recommendation can be adjusted determining the crop nutrient status due to the mineralization level of the field areas with a minimum value of the coefficient.

According to further aspects, a system, a data processing apparatus, a computer-readable storage medium, and a computer program product configured to carry out the above discussed methods are envisaged within the present disclosure.

According to a further aspect of the present disclosure, the system further comprises a display and an input unit, wherein the system further comprises a Graphical User Interface configured to display at least one first and at least one second measurement regions.

According to a further aspect of the present disclosure, the graphical user interface is further configured to display a plurality of first and second measurement regions and the graphical user interface is further configured to receive an input for selecting at least one first and at least one second of the plurality of measurement regions displayed.

According to a further aspect of the present disclosure, the graphical user interface is further configured to display weather forecast data, crop and/or field data associated to the at least one first and at least one second measurement regions.

According to a further embodiment, the system is further configured to receive farm data and display at least one scheduled task, wherein the system is further configured to display the at least one first and at least one second measurement region, and different itineraries which include the at least one first and at least one second measurement region and at least one of the scheduled tasks displayed.

Following this approach, the farmers can plan accordingly their itineraries in the agricultural field.

According to a further embodiment, the system is further configured to receive an input for determining at least one predetermined area of the agricultural field and the system is further configured to determine the at least one first and at least one second measuring region within the at least one predetermined area.

Following this approach, the farmers can direct the search of the at least one first and at least one second measurement region to a predetermined area to their convenience.

## Brief description of the figures

The accompanying drawings, which are included to provide a further understanding of the present disclosure and are incorporated in and constitute a part of this specification, illustrate embodiments of the disclosure and together with the description serve to explain the principles of the disclosure.

Figure 1 shows a system according to an embodiment of the present disclosure.

Figures 2a and 2b show an exemplary use according to different embodiments of the system of the present disclosure.

Figure 3 shows an example of the Graphical User Interface showing an agricultural field according to one embodiment of the present disclosure.

Figures 4a-b show different embodiments of the Graphical User Interface according to different embodiments of the present disclosure.

Figures 5a-c3 show different embodiments of the Graphical User Interface according to further embodiments of the present disclosure.

Figure 6 shows a workflow of the main embodiment of the present disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

## Detailed Description

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The enumeration of numeric values by means of ranges of figures comprises all values and fractions in these ranges, as well as the cited end points. The term "approximately" as used when referring to a measurable value, such as a parameter, an amount, a time period, and the like, is intended to include variations of +/-10% or less, preferably +/-5% or less, more preferably +/-1% or less, and still more preferably +/-0.1% or less, of and from the specified value, in so far as the variations apply to the disclosure disclosed herein. It should be understood that the value to which the term "approximately" refers per se has also been disclosed.

Unless defined otherwise, all terms present in the current disclosure, including technical and scientific terms, have the meaning which a person skilled in the art usually gives them. For further guidance, definitions are included to further explain terms which are used in the description of the disclosure.

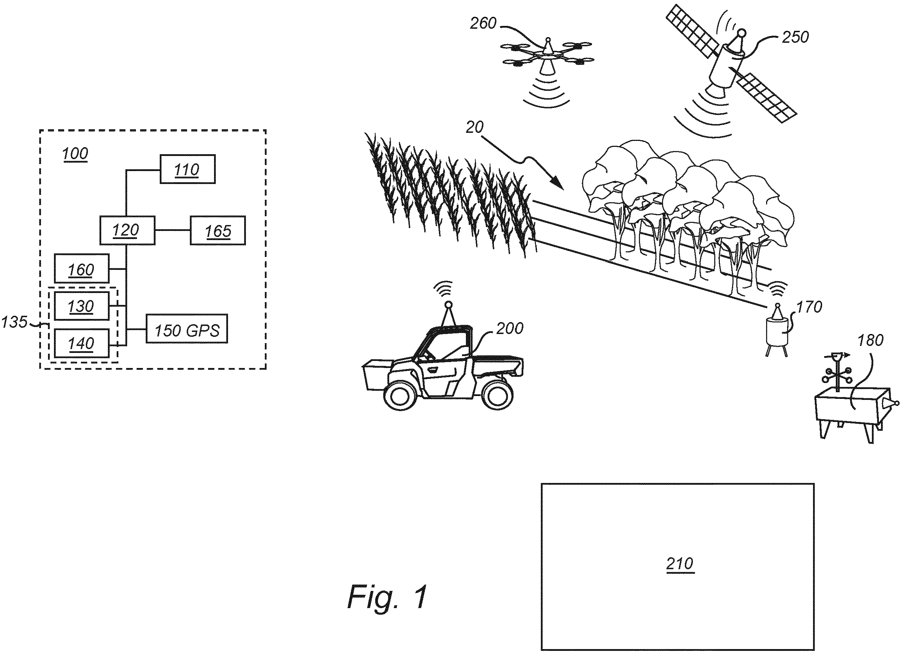

In Fig. 1, a schematic representation of an example of a system according to the present disclosure is represented. Figure 1 depicts an agricultural field comprising a crop within an agricultural region with other systems and apparatus with which the system 100 may interoperate. A system 100 according to the present disclosure comprises a crop nutrient detection device 110 and a communication unit 120.

Crop nutrient detection devices as the ones discussed in the prior art above present different constructional arrangements. Some embodiments of these devices comprise an own communication unit or are operably connected to a mobile communication device like a smartphone or tablet which functions as communication unit, as pointed in the prior art. In other embodiments, the devices are peripherals attached to the mobile communication device, using a camera of the mobile communication device as optical detection unit, basing respectively the determination of the crop nutrient content on the reflectivity or transmissivity of the leaves at specific wavelengths. However, no specific determination of the detection principle is intended for the goal of the current disclosure, since the specificities of the detecting principle is not intrinsically related to the advantages provided by the current disclosure.

Communication unit 120 may therefore be an integral or dedicated unit integrated with the crop nutrient detection device 110 or a separate electronic communications device operably connected to the crop nutrient detection device 110. In some embodiments, the crop nutrient detection device 110 may be a peripheral device operably connected or integrated with a mobile phone. In a further embodiment, system 100 may be a handheld mobile device. Different examples of these embodiments would be represented by already existing devices of the applicant like the N-Tester BT®, the N-Tester Clip® and Yaralrix®, which are incorporated herein by reference.

While the N-Tester BT® and the N-Tester Clip® are based on the change of light intensities in certain wavelengths upon light transmission through a plant leaf, Yaralrix® is based on ground-based photographs of plant canopies taking into account sun's light reflectivity. However, other type of devices which determine a crop nutrient content, based on for example Laser-induced breakdown spectroscopy are as well included in the scope of the current disclosure. As mentioned above, all embodiments disclosed herein and all those equivalents are considered for the current disclosure since the detection method principles does not compromise the approach of the current disclosure.

System 100 comprises several components such as a processor 160, a wireless communication unit 120, a location determining or GPS unit 150 or equivalent, a memory unit 165, a display 130 and an input unit 140, which might be combined as a touch sensitive screen 135. System 100 is however not limited by these components and may further comprise other elements as customary within the standard practice.

System 100 may further comprise an agricultural recommendation engine 210 to which the system may be remotely connected by means of the communication unit. Agricultural recommendation engine 210 may be represented by a computer, a remotely accessible server, other client-server architectures or any other electronic devices usually encompassed under the term data processing apparatus.

Agricultural recommendation engine 210 may comprise field, farm data and external data, whereby external data comprises weather data and further data provided by weather forecast providers or other third parties. Field data may comprise amongst others, field and geographic identifiers regarding the geometry of the boundaries of the agricultural field, including the presence of areas within the agricultural field which are not managed, topographic data, crop identifiers (crop variety and type, growth status, planting data and date, plant nutrition and health status), harvest data (yield, value, product quality, estimated or recorded historic values), soil data (type, pH, soil organic matter (SOM) and/or cation exchange capacity, CEC) as well as historic series of the data. Farm data may comprise further data regarding to planned and past tasks like field maintenance practices and agricultural practices, fertilizer application data, pesticide application data, irrigation data and other field reports as well as historic series of the data, allowing the comparison of the data with past data, and further administrative data like work shifts, logs and other organizational data. Planned and past tasks may comprise activities like surveillance of plants and pests, application of pesticides, fungicides or crop nutrition products, measurements of at least one farm or field parameter, maintenance and repair of ground hardware and other similar activities.

The agricultural recommendation engine 210 may be configured to retrieve soil data from available online soil databases like SoilGrids from the World Soil Information, SSURGO (Soil Survey Geographic Database from the United States Department of Agriculture) or any similar soil data repository.

System 100 may be further configured to receive any of the above-mentioned data and further field data from a predetermined number of locations within or nearby the analyzed region, inputted manually by the users/farmers by means of the input unit 140 or received by the communication unit 120 from dedicated sensors 170. Further, system 100 and agricultural recommendation engine 210 may be configured to receive weather data from nearby weather stations 180 and/or external crop/farm sensors 170, as well as by means of the input unit 140. Nearby weather stations 180 and/or external crop/farm sensors 170 are configured to communicate via one or more networks. In another embodiment, weather data is provided by external weather forecast companies. Weather data may further include present and past temperatures, accumulated precipitation, relative humidity, wind speed, solar radiance, accumulated sun hours, etc.

System 100 may further be operatively connected to an agricultural apparatus 200. Examples of agricultural apparatus 200 include tractors, combines, harvesters, planters, trucks, fertilizer equipment, and any other item of physical machinery or hardware, typically mobile machinery, and which may be used in tasks associated with agriculture. In one embodiment, system 100 may be configured to communicate with the agricultural apparatus 200 by means of wireless networks in order to carry out a fertilizer application.. System 100 may be further configured to produce a downloadable script file for the agricultural apparatus to carry out the fertilizer application.

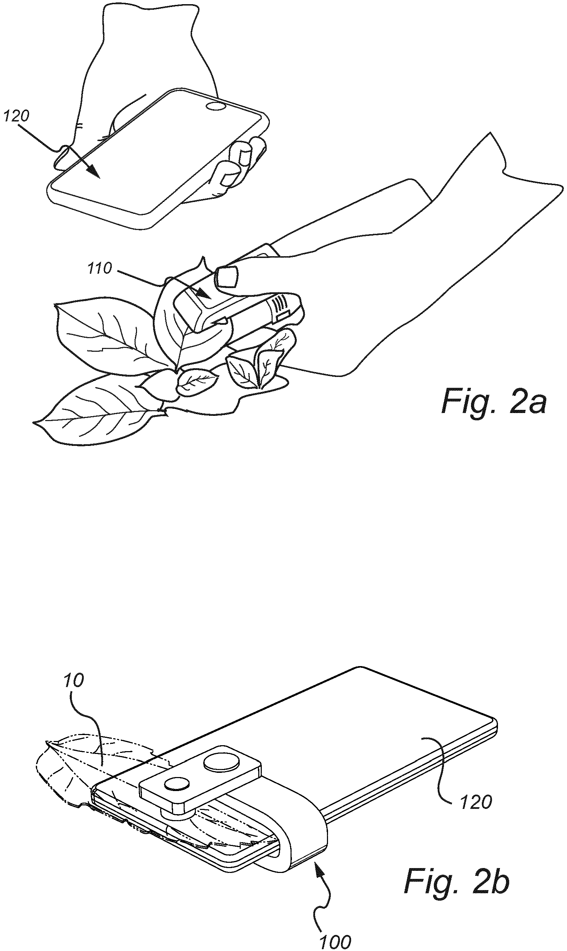

Figures 2a-b show an exemplary use according to different embodiments of the system of the present disclosure. Figure 2a shows an embodiment of the current disclosure where the communication unit 120 and the crop nutrient detection device 110 are different elements. Crop nutrient detection device 110 may be operatively connected to the communication unit by means of a suitable wired or wireless connection. Figure 2b shows a further embodiment of the current disclosure where the system is formed by a mobile phone and a peripheral element operatively connected to the mobile phone enables the mobile phone to determine the crop nutrient level based on the transmissivity of light through the plant leave 10 situated in between. The farmers, when in a field, are able of determining the plant nutrient content by directly analyzing one or more leaves 10 of a plant present in the agricultural field.

The farmers, when directly measuring the plant nutrient content by means of the crop nutrient detection device, can rely on their knowledge to determine plants which show a healthy status (no discolored leaves or abnormally looking plant). Usually, farmers might take a plurality of measurements within an area, hoping to collect enough measurements which can be representative of the crop nutrient content within the agricultural field. However, in spite of the best intentions and knowledge of the farmers, they cannot be aware of the variability across the agricultural field due to in-field variabilities across the field of several parameters (soil properties and sub-soil water conditions among others) and can therefore unwillingly collect a crop nutrient content based on these measurements which are not representative of the crop nutrient content for the whole crop. While it is feasible to take enough measurements to cover the whole agricultural field, it would require an enormous amount of work from the farmers. As such, while non-destructive direct measurements can be very accurate in a very local and restricted way, there is a need to improve the accuracy of fertilizer recommendations for the crop across the whole agricultural field reducing the amount of work the farmers are required to put in.

As such, following the teachings of the current disclosure, the farmers may be pointed and directed to at least one first and at least one second measurement region for carrying out the measurements which enables a suitable fertilizer recommendation.

For example, the farmers, at the start of their days, when planning the tasks and activities to be carried out on the agricultural field, either at home or at the farm's office, by means of a mobile or stationary electronic device, may determine the at least one first and at least one second plurality of measurements region where it would be of advantage to carry out the measurements in order to fully assess the optimal needed fertilizer amount for the whole agricultural field.

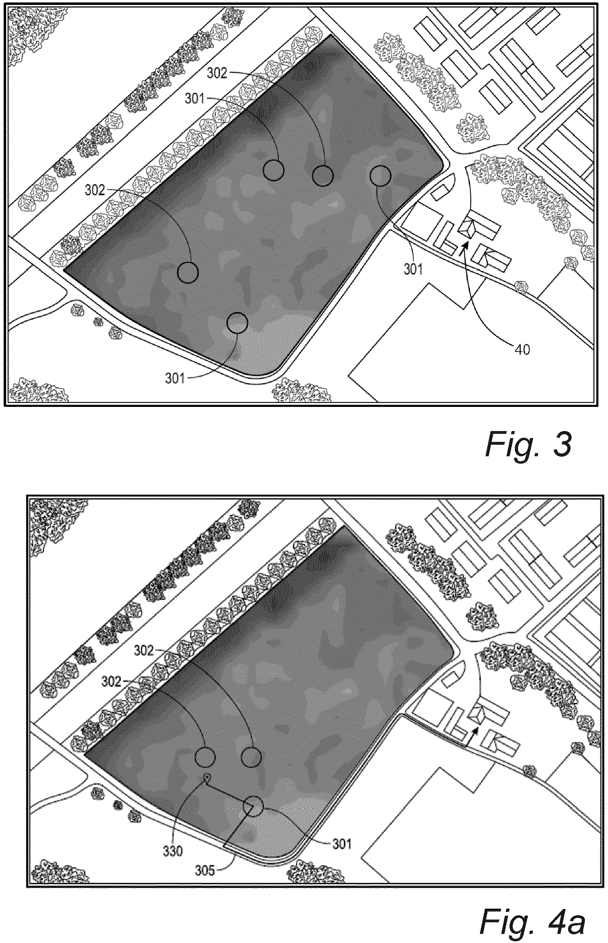

Figure 3 shows an embodiment of remote data representing the values of one of the plurality of coefficients generated from the remote data including at least a plurality of wavelengths, showing the distribution over the agronomic field and the in-field variabilities as well as a plurality of first measurement regions 301 and second measurement regions 302 as described in the present application. While the different tones present in Figure 3 and further figures is intended to be indicative of different crop status, no limitation is intended as to the corresponding location of the first and second measurement regions and the representation of the figures is merely orientative.

The present application makes use of suitable remote data for determining the in-field variability of the crop nutrient content. Remote data can be referred to data provided by imaging satellites 250 or suitable manned or unmanned imaging aerial vehicles 260. These satellite or vehicle systems are configured to communicate by means of dedicated networks and usual methods which do not need being disclosed herein. Amongst the different remote data available for use, satellite data is nowadays widely available from numerous public (LANDSAT from NASA, SENTINEL from ESA) and/or private providers. The present method is however not limited to a satellite data platform, since the spectral bands which can be of use for the present method are provided in a big range of the standard satellite data. Due to the differences present across different satellite and optical sensor platforms, it is hereby not intended to limit the support of the current disclosure to exact and specific wavelengths and the given wavelengths are provided for orientation. While different factors and corrections can be introduced to account for these variabilities, the use of wavelengths proximate to the ones mentioned below should be understood since the specifications of said platforms vary accordingly.

While the advantages of using remote sensing due to the wide availability of the data are clear, the method of the current disclosure may as well make use of crop nutrition status maps as generated by any means available, for example, by means of tractors having generated these maps in previous runs, may there be available to the farmers.

In an embodiment, remote data is obtained from the Sentinel-2 satellite. The Sentinel-2 mission contains a MSI (Multi Spectral Instrument) that takes high spatial resolution data in order to monitor Earth's surface. The MSI works passively, by collecting sunlight reflected from the Earth and is therefore a more efficient and less energy consuming detection method. Sentinel-2 consists of 13 bands with different spatial resolutions (10m, 20m or 60m), in the visible, near infrared, and short-wave infrared part of the spectrum. In an embodiment, the current method uses the image data related to spectral bands with at least a plurality of wavelengths comprised approximately between 700 and 850 nm. In a further embodiment, the present method uses data related to spectral bands with a wavelength of approximately 740 and 780 nm. The use of Sentinel-2 spectral bands from the MSI produces measurements with a high resolution (approx. 20 m) and is therefore preferred for the implementation of the current disclosure. However, Sentinel-2 data is not available on cloudy days. In this sense, although less precise, the current disclosure may comprise the use of remote data from Sentinel-1 or other active SAR satellites which can be used in cloudy days. However, the current disclosure offers the further advantage that in order to achieve an accurate nitrogen recommendation, there is no need for having a very recent image. In-field variability usually remains constant or has slower dynamics, provided the absence of locally limited pests or other events.

In an embodiment, remote data comprises data relating to different spectral bands are used for improving the determination of the present method. Further compensation and calibration algorithms are considered within the present application, depending on the nature and origin of the remote data. In one embodiment, remote data is preprocessed for cloud and haze removal and light calibration, which is of advantage may the remote data be provided by means of a satellite as described above. In another embodiment, when the remote data is provided by a manned or unmanned aerial vehicle or drone, cloud correction is not needed, but different light compensation procedures are envisaged to compensate for the sunlight characteristics and sun relative position.

Once the remote data has been received, wherein the remote data comprises imagery data from at least a determined location comprising a plurality of spectral bands or optical domains of different wavelengths, the system is configured to generate at least one coefficient derived from the remote data. Different coefficients (or indexes) have been used in the literature for obtaining different agricultural, soil and vegetation information like the difference vegetation index and the normalized difference vegetation index (NDVI). However, NDVI is sensitive to the effects of soil brightness, soil color, atmosphere, clouds, cloud shadows, and leaf canopy shadows and requires remote sensing calibration. In that sense, further coefficients contemplated may comprise the Atmospherically Resistant Vegetation Index (ARVI) to reduce the dependence of atmospheric effects; the Soil-Adjusted Vegetation Index (SAVI) or the Type Soil Atmospheric Impedance Vegetation Index (TSARVI) which take into consideration the distinction of vegetation from the different types of soil background. Apart from the standard vegetation indexes comprised in the state of the art, the present application may make use of further indexes which will be described in more detail below.

In order to provide a reliable vegetation index or coefficient which is indicative of the chlorophyll content present in the vegetation, the further indexes of the application may include different wavelengths at the so-called red edge of vegetation between 670 and 800 nm. In further embodiments, in order to provide a reliable vegetation index or coefficient which is indicative of the water content present in the vegetation, the remote data may comprise further wavelengths at or close to water absorption bands, such around 850, 110, 1450 or 1950 nm in order to determine the canopy water content.

Usual vegetation indexes or coefficients used in the field of remote sensing for the determination of agricultural properties, including crop moisture, crop nutrient status and other agricultural properties include the normalized difference vegetation index (NDVI), which is computed as follows:

$$NDVI = \frac{NIR - RED}{NIR + RED},$$

wherein NIR represents the reflectance value related to the Near Infrared wavelengths, at about a wavelength range of 750-950nm and RED the reflectance measurements acquired in the red visible spectrum, at about a wavelength range of 600-700 nm. Correspondingly the Normalized Difference Water Index (NDWI) can be expressed as:

$$NDWI = \frac{NIR - SWIR}{NIR + SWIR},$$

wherein NIR represents again the Near Infrared Wavelengths, and SWIR the Short-Wave Infrared wavelengths, at wavelengths in a range of 840-2200 nm, always depending on the different satellite platforms.

The method of the current disclosure may as well make use of other indexes like the Leaf Area Index (LAI), defined as follows:

$$LAI = \frac{NIR}{RED + SWIR},$$

wherein NIR and RED represent as above the data relating to the respective wavelengths of near infrared and red bands and SWIR represents the short-wave infrared. Determining the chlorophyll content, directly related to the crop nitrogen content, and the dry fresh biomass given as an indication by the Leaf Area Index, a more accurate determination of the crop nutrient status can be carried out.

The above listed coefficients are merely some of the suitable ones to carry out the method of the current disclosure. However, the list of coefficients (or indexes) is not meant to be limiting. There is a great variance of different coefficients which are as well able of being used by the present method, as mentioned above for computing other properties of agronomical fields (e.g., soil moisture) which although not directly indicative of crop nutrient content, assist the determination of crop nutrient status by improving further insights into other field parameters. Moreover, the current disclosure may comprise using a suitable combination of coefficients for the determination of the location of the measurement regions. A suitable combination of coefficients may be represented by a coefficient formed as a combination of different coefficients to independently assess individual crop status factors or may be represented by the different coefficients which can then be determined according to a multi-parameter analysis such that different properties of the agricultural field may be observed simultaneously for the determination of the measurement regions. For example, areas with similar or predetermined soil properties may be determined, amongst which a further specific crop status may be observed in order to determine the different measurement regions. Following this approach, further in-field variabilities can be assessed and factored out from the determination of the measurement regions.

As such, according to a main embodiment, the method of the present disclosure comprises determining 1000 at least a portion of the agricultural field comprising the crop for which the recommendation is provided. Within an agricultural field there may be different crops, or crops of the same type but different variety. Hence, it is comprised within the scope of the present disclosure to determine the at least a portion of the agricultural field comprising a specific crop or as well a portion of the crop where the fertilizer application is intended.

In the present application, determining at least a portion of the agricultural field may comprise receiving inputs from the farmers via the input unit to manually select a specific field of interest. Determining at least a portion of the agricultural field may comprise determining said portion automatically by the agronomic recommendation engine 210, based on field, farm and/or weather data. Determining said portion may further comprise automatically detecting the position of the farmers by means of the location unit 150 and carrying out the determination based on the farmers position.

According to the main embodiment, the method of the present disclosure further comprises receiving data 1100, wherein receiving data comprises receiving remote spectral data from at least a plurality of wavelengths of the agricultural field and processing 1200 the remote spectral data to obtain at least one coefficient indicative of the crop status within the agricultural field as explained above, and determining the at least one first and at least one second measurement regions within the agricultural field for carrying out the at least one measurement based on the at least one coefficient or a combination thereof.

According to the main embodiment, determining 1300 the at least one first and at least one first measurement region comprises selecting amongst the areas of the agricultural field wherein the at least one coefficient or combination thereof is within a first predetermined threshold from a first predetermined value of the coefficient (or combination thereof) in the agricultural field and determining the at least one second measurement region amongst the areas of the agricultural field wherein the at least one coefficient or combination thereof is within a second predetermined threshold from a second predetermined value of the coefficient (or combination thereof) in the agricultural field.

In a further embodiment, the first predetermined threshold may define ranges comprised within a 20% of the first predetermined value of the at least one coefficient or combination thereof, more specifically 10%, and more specifically 5% of the first predetermined value of the at least one coefficient or combination thereof.

In a further embodiment, the second predetermined threshold may define ranges comprised within a 20% of the second predetermined value of the at least one coefficient or combination thereof, more specifically 10%, and more specifically 5% of the second predetermined value of the at least one coefficient or combination thereof.

In a further embodiment, the first predetermined value may be a value representative of the maximum value of the at least one coefficient or combination thereof and the second predetermined value may be a value representative of the median, average or any other measure of central tendency of the coefficient or combination thereof.

Following this approach, the farmers are provided with at least one first and at least one second measurement regions allow a truthful representation of the crop nutrient status, avoiding the need of establishing a reference N-rich strip, avoiding therefore the waste of fertilizer. This approach has the further advantage that the findings from the current method do not need crop data or further calibration. Establishing a direct measurement in the at least one first and at least one second measurement region, as described within the current embodiment allows, since a measurement in the at least one first measurement region will give a reference value for areas of the crop where no nutrient stress is present and determine the amount of fertilizer needed in the rest of the agricultural field based on the second measurement regions since it is related to an average value of the crop nutrient status and therefore represents the margin up to which the crop should be fertilized to reach the development status present in the at least one first measurement region.

In a further embodiment, the first predetermined value may be a value representative of the minimum value of the at least one coefficient or combination thereof and the second predetermined value may be a value representative of the median, average or any other measure of central tendency of the coefficient.

Following this approach, the farmers are provided with an indication of the chlorophyll amount of the areas with a worse crop status, expressed in relation to the average areas of the field, wherein this can indicate the need for a prompt fertilizer application due to the depleted state of those areas, when the first measurement regions represent the lowest crop status levels of the field. In this embodiment, the method may not only be able of adjusting the fertilizer recommendation based on these under nurtured zones, but as well be further configured to adjust an application date of the fertilizer application, since based on the crop nutrient content of these zones close to depletion a fertilizer application date can be established. Determining the crop nutrient content at these zones with lowest coefficient values helps as well determining the nutrient level of the crop deriving from the mineralization of the field. These mineralization levels present are highly dependent on the type of crops farmed in the previous seasons and based on these levels a fertilizer recommendation can be improved.

It is therefore directly derivable to establish a method wherein at least one first, at least one second and at least one third measurement regions are determined, wherein the measurement regions are determined following the above-mentioned embodiments and the first measurement region is chosen amongst the areas within a certain threshold of the maximum value of the coefficient, the at least one second measurement region is chosen amongst the areas within a threshold of the average or the like values of the coefficient and the at least one third measurement region is chosen amongstthe areas within a threshold of the minimum values of the coefficient.

According to the current disclosure receiving data means accessing or downloading data from at least one of the different sources as mentioned above, i.e. satellite, aerial photography, or intermediate networks or platforms providing the data. Receiving data may comprise any suitable means for receiving data within the state of the art. Further, processing the remote spectral data may comprise the standard operations of normalization, smoothing, cloud removal/and or other preprocessing which improves the remote spectral data quality as well as the necessary operations for obtaining the at least one coefficient as explained above.

In a further embodiment, the at least one first and at least one second measurement regions are further determined based on at least one distance and/or location parameter.

While there might be several regions which satisfy the selection conditions for their determination as measurement regions, the current disclosure may for an advantageous selection which does not only take into consideration the crop status but as well their ease of access within the agricultural field as well as the respective situation of the at least one first and at least one second measurement regions with respect to each other.

Based on the common interpretation of the terms, determining one distance between two specific points in an agricultural field is determining the shortest path between the two points. When determining the distance between a point and a line, the shortest path will be given by determining the perpendicular to the line which crosses the point, and so on as it is customary in the practice.

In a further embodiment, the method is further configured to determine the at least one first and at least one second measuring regions such that the distance between them is within a predetermined threshold.

The predetermined threshold may be set by the farmers or automatically based on the extent of the agricultural field or bounded by a predetermined value. Once having a suitably located at least one first or at least one second measurement region, based on the determined at least one coefficient indicative of the crop status which fulfills any of the further examples below or above, the method may be further configured to find the respective at least one second or at least one first measurement region reducing the distance between them.

In a further embodiment, the method is further configured to determine the at least one first and at least one second measuring regions such that the distance from the at least one first measurement region to a first predetermined location and the distance from the at least one second measurement region to the first predetermined location are minimized.

In a further embodiment, the method is further configured to determine the at least one first and at least one second measurement regions such that the distance from the at least one first measurement region to a first predetermined location and the distance from the at least one second measurement region to a second predetermined location are minimized.

The advantages of said embodiments will be made clear ahead. Usually, geographical barriers or the lack of existence of specific connections within specific areas of fields or between different fields may render cumbersome for the farmers to move from specific regions of the farms and/or agricultural fields to other specific regions. For example, certain agricultural fields are fenced and have a unique point of entry. As such, certain areas can be prioritized by determining a distance from the entry gate to the at least one first measurement region and/or to the at least one second measurement region. Other agricultural fields which lack said unique point of entry may be referred to their boundaries for establishing the reference distances. While crop status at the boundary may lead to inaccuracies due to the problematics associated with them (lack of appropriate fertilization due to strict local regulations, insufficient information from remote sensing due to the boundaries) and the nearest regions to them should be avoided, it is always of convenience for the farmers to determine measurement regions which are easily accessible from one field boundary. As such, the method may be configured to determine the suitable at least one first and at least one second measurement regions which are as close as possible to any of the boundaries while maintaining a minimum distance from them.

In another embodiment, the method of the current disclosure is further configured to determine the existence and location of tracks or trails within the agricultural field and determine the at least one first and at least one second measurement regions based on a distance from the determined tracks or trails within the agricultural field. In certain crops, the use of machinery for specific purposes leaves tracks which remain over the whole crop season and/or over several seasons. Apart from the obvious reasons for transport facilities, soil in these tracks is compacted over time and is easily to drive or walk through and the determination of access routes by means of these tracks is advantageous for the farmers.

The method being configured to determine the existence and location of track or tramlines may comprise at least one of receiving GPS data from agricultural machinery 200 from previous operations in the agricultural field, automatic determination from remote imagery and/or by means of user input. The farmers may therefore use input unit 140 by means of a dedicated Graphical User Interface to determine the existence and location of tracks or trails present in the agricultural field. Once the method of the current disclosure has determined the existing tracks or trails, the method is further configured to determine a distance from the at least one first and/or the at least one second measurement region to the determined tracks or trails if any and determining the at least one first and/or the at least one second measurement region which are closest to the track or trail.

Hence, the first and/or the second predetermined locations can be one of the following: the current position of the farmer as determined by the positional data of the communications unit, a predetermined location as determined by the user by means of the input unit, a specific location as given by field and or farm data: i.e. the location of the farm's entrance gate, a specific location where a planned task like maintenance of an agricultural piece of equipment or any in-site visit to the farm is scheduled, the position of a sensor in the agricultural field, a position within the farm boundary or within a track or trail of the agricultural field and/or a previous sampling position on the agricultural field.

Farms may comprise several agricultural fields of the same of different crops of different sizes and of course locations. As such, the farmers, when confronted with the task of measuring the crop status for a suitable fertilizer recommendation are usually confronted with tedious and lengthy journeys through the farm in order to cover all agricultural fields needed for the scheduled date of fertilizer application in a plurality of agricultural fields.

While the current method has been explained here for an individual agricultural field, farmers may service more than one agricultural field comprising same or different crops within a farm which might be located at different locations. The method of the current disclosure may be further configured to determine said at least one first and at least one second measurement regions in a plurality of agricultural fields such that each set of at least one first and at least one second measurement regions within an agricultural fields are determined according to any of the above mentioned embodiments and/or the plurality of first and second measurement regions containing each region of the individual agricultural fields are determined as well according to any of the above mentioned embodiments.

In a further embodiment, the method further comprises receiving at least a first crop nutrient content and at least a second crop nutrient content form the at least one first and at least one second measurement regions and the method further comprises determining a fertilizer recommendation based on the at least one first and at least one second crop nutrient content.

By determining the crop nutrient content in the at least one first and the at least one second measurement regions, an improved fertilizer recommendation can be determined.

In a further embodiment, when the at least one first measurement region is chosen amongst the areas within a certain threshold of the maximum value of the coefficient, and the at least one second measurement region is chosen amongst the areas within a threshold of the average or the like values of the coefficient, a fertilizer recommendation may be determined based on the ratio of the first crop nutrient and the second crop nutrient content. For example, based on the first crop nutrient content (CN1) and the second crop nutrient content (CN2), a fertilizer blanket fertilizer application for the whole field may be generated according to the following relation:

$$N_{REC} = C_1 * CN2 / CN1;$$

Wherein NREC represents the amount of fertilizer needed and C1 represents a specific constant. The value is of specific relevant when the ratio CN2/CN1 is below a predetermined value which indicates the room for improvement in the nutrition of the averagely nurtured areas, since this would indicate that the regions with an average value of the coefficients, and those below it, will be benefitted from the fertilizer application. In an embodiment, the predetermined value may be comprised between 0.7 and 1, more specifically between 0.8 and 1, more specifically between 0.9 and 1.

In a further embodiment, the method further comprises adjusting the fertilization recommendation based on the absolute value of the first or second crop nutrient content. In view of the absolute values of the first or second crop nutrient crop, the fertilization recommendation may be adjusted in order to tackle a lack of nutrients related to the first or the second measurement regions.

In a further embodiment, the method further comprises carrying out the fertilizer application excepting at the areas amongst which the first measurement regions have been chosen. When the first measurement regions have been chosen amongst the areas where the first predetermined value may be a value representative of the maximum value of the at least one coefficient or combination thereof, these regions are supposed to have no nutrient stress and therefore have a lesser need of fertilizer.

In a further embodiment, the current method may be configured to produce a machine-readable application prescription map based on the variable fertilizer recommendation to control a fertilizer application system. The current method may be further configured to establish direct communication with an agricultural machinery 200 over standard networks to carry out the fertilizer application in an automatized manner. In a further embodiment, the current method may be configured to produce a downloadable script or file, which can be used for uploading such an application prescription map by physical means to a fertilizer application system.

In a further embodiment, the variable fertilizer recommendation is carried out by means of a fertilizer application system, like a spreader or specially adapted agricultural machinery.

In another embodiment, determining the measurement regions comprises determining the measurement regions based on weather data or weather forecast data. When the farmers have already a planned fertilizer application, weather future conditions have to be considered since rain might affect the application of fertilizers due to leaching, while wind may be considered for spraying applications. Further, the choice of a measurement region can be improved by avoiding areas with a high water stress due to the thinning of the leaves and resulting chlorophyl concentration. Hence, determining at least one of the measurement regions well ahead in time before a series of days with adverse conditions can be planned in such a way that both the moment of the application of the fertilizer is taken into consideration, as well as the moment of carrying out the measurements.

In a further embodiment, combining the two preceding ones, a further advantage can be made apparent. In the current embodiment, when having a limit date for a fertilizer application and weather forecast data, determining the measurement regions may further comprise determining at least one measurement region based on the limit date and the weather forecast data. In this embodiment, the farmers are provided with a further advantage, in which they can plan fertilization practices which although being quite ahead will not be able to be carried away due to weather conditions.

System 100 may further comprise a dedicated Graphical User Interface as shown in Figures 3 to 5c which assists the farmers in choosing the at least one first and at least one second measurement regions. As previously mentioned, the system may be configured to display a plurality of first and second measurement regions as determined by the method of the current disclosure to the farmers by means of display unit 130 for the farmers to select by means of input unit 140 the best suitable option.

Although the system 100 is of a mobile nature, the Graphical User Interface may as well be run on a laptop or desktop electronic device at the farm in preparation of the daily activities, wherein it can be communicated with system 100 by means of usual networks to transmit the determined measurement regions and the navigation possibilities.

In an embodiment as shown in the Figures, the current system 100 may comprise an input unit 140 and display unit 130 combined as a touch sensitive display 135.

The farmers, when planning to carry out the measurements, may first select at least one field from a plurality of agricultural fields to be inspected. The fields may comprise crops of the same or different type and at least a part of the field may be determined in which the crop for which the fertilizer recommendation is intended is located. System 100 may be configured to display the at least one agricultural field determined. System 100, when displaying the at least one field may further display an icon 40 representative the location of the farmers if in the view. System 100 may further display, when the farmer is not on the displayed view due to scale or to the actual position of the farmer, an icon 40 representative of the relative location of the farmers.

System 100 is further configured to display at least one first and at least one second measurement regions within the agricultural field. As it is to be seen in Figure 3, system 100 may be further configured to display a plurality of at least one first and at least one second measurement regions which are suitable for carrying out the measurements, wherein the farmers may select by means of the input unit 140 the most convenient at least one first and at least one second measurement regions.

System 100 may be configured to display first a plurality of first measurement regions allowing the farmers to select their preferred first measurement region. Upon selection, system 100 may display a plurality of second measurement regions, as displayed in Figure 4a. Based on the selection of the first measurement region 301, the system is configured to show a plurality of second measurement regions 302 which are within a predetermined distance from the first measurement region 301. System 100 may further display scheduled tasks 330 from existing farm data, thereby providing the user with further information for choosing the at least one first and at least one second measurement region. Icon for the scheduled tasks 330 may display further information on the task to be carried out like the possible time scheduled, the content of the task or any other note. While the example has been explained here in a predetermined order, it is clear that the order can be reversed without departing from the scope of the present disclosure and the measurement regions processed accordingly, achieving herewith the same advantages.

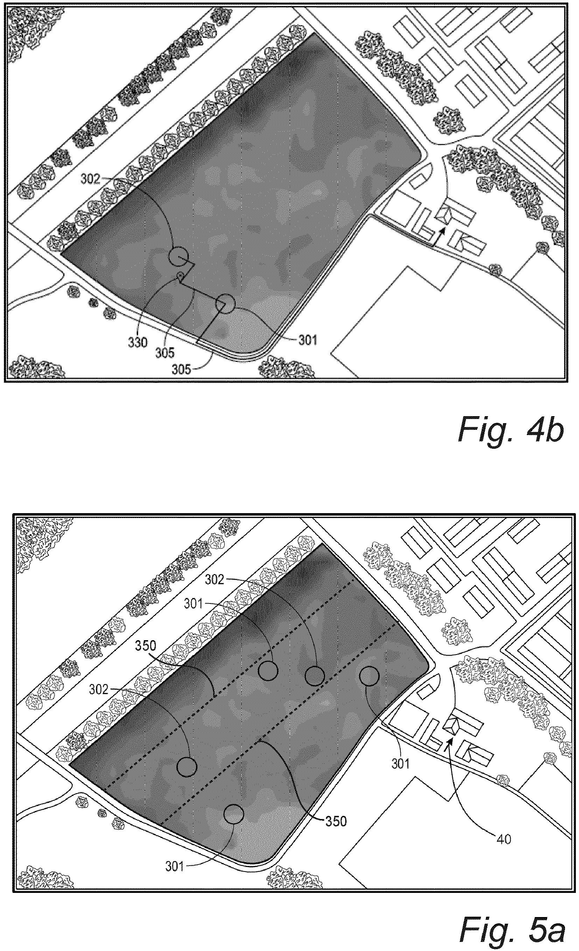

Upon selection of at least a first and at least a second measurement regions, the system may be configured to display a measurement path or itinerary 305, as displayed in Figure 4b, which connects the location of the farmer as displayed by the icon 40, with the at least one first and second measurement regions. The system may be further configured to display the measurement path as well connecting the measurement regions 301 and 302 with the location of the scheduled task 330 as shown in the Figure.

In an embodiment, the farmers, upon display of the at least one agricultural field may select at least one first predetermined location. The at least one first predetermined location may be one of the locations represented by the icons 330 or any other predetermined location within or nearby the agricultural field where the farmers may intend to direct themselves to or pass by.

In this embodiment, system 100 may be configured to display the at least one first and at least one second measurement region such that the distance between the at least one first and at least one second measurement region and the first predetermined location are within a predetermined threshold. System 100 may be configured to display a plurality of at least one first and at least one second measurement regions upon which the system may be further configured to receive an input for selection of at least one first and at least one second measurement regions.

System 100 may, upon determining the at least one first and at least one second measurement regions, display possible measurement routes or itineraries 305 to the at least one first and at least one second measurement region from a predetermined position, wherein the predetermined position may be any of a position of the farmers by means of an icon 40 as indicated by the location unit of the system 100, a first predetermined location and a second predetermined location. System 100 may be configured to provide real-time navigation information for the farmers to reach the at least one first and at least one second measurement region and, optionally, the at least one predetermined location.

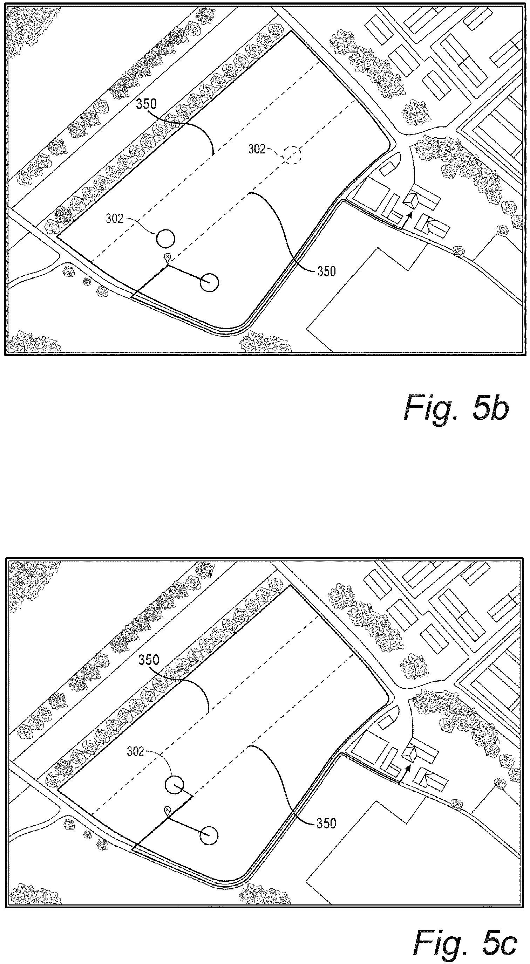

Figures 5a to 5c show a further embodiment of the present disclosure, wherein the tracks 350 are considered for the determination of the at least one first and at least one second measurement region, as well as for the determination of the possible measurement paths or itineraries 305, which might be displayed. As in the previous embodiments, the farmers may select first a at least one first measurement region or at least a second measurement region according to the present embodiment, wherein the at least one first and at least one second measurement region are determined according to further embodiments of the present disclosure.

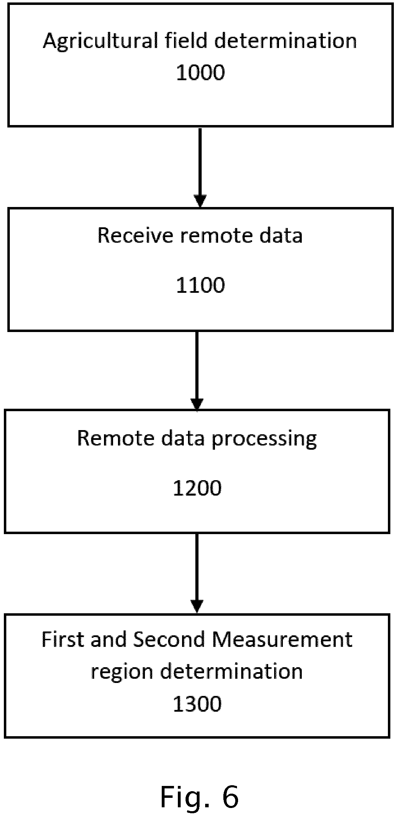

Figure 6 shows an exemplary workflow of a method according to the main embodiment of the current disclosure. Although the process steps, method steps, algorithms or the like may be described in a sequential order or by the use or ordinal numbers, such processes, methods and algorithms may be configured to work in alternate orders. In other words, any sequence or order of steps that may be described does not necessarily indicate a requirement that the steps be performed in that order. The steps of processes described herein may be performed in any order practical.

Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described.

Accordingly, the detailed description thereof should not be construed as restrictive in all aspects but considered as illustrative. The scope of the disclosure should be determined by reasonable interpretation of the appended claims and all changes that come within the equivalent scope are included in the scope of the current disclosure.

List of Reference Signs

| | |
|---|---|
| 10 | Plant leaf |
| 20 | Agricultural field |
| 30 | Farmers location |
| 40 | Farmers location icon |
| 100 | System |
| 110 | Crop nutrient detection device |
| 120 | Communication unit |
| 130 | Display unit |
| 135 | Touch sensitive display |
| 140 | Input unit |
| 150 | Location unit |
| 170 | Crop/Farm sensors |
| 180 | Weather station |
| 200 | Agricultural apparatus |
| 210 | Agricultural recommendation engine |
| 250 | Remote imaging satellite |
| 260 | Manned or unmanned imaging aerial vehicles |
| 301 | First measurement regions |
| 302 | Second measurement regions |
| 305 | Measurement routes or itineraries |
| 330 | Scheduled tasks |
| 350 | Tracks |

**Claims**

1. A computer-implemented method for determining at least one first measurement region and at least one second measurement region for carrying out at least one measurement in each region with a crop nutrient detection device for providing a fertilizer recommendation to a crop, comprising the steps of:

- i) determining at least a portion of an agricultural field comprising the crop for which the recommendation is intended;
- ii) receiving data, wherein receiving data comprises receiving remote spectral data from at least a plurality of wavelengths of the agricultural field, and the method further comprises the steps of:

- processing the remote spectral data to obtain at least one coefficient indicative of a crop status within the agricultural field,
- determining the at least one first and at least one second measurement regions within the agricultural field for carrying out the at least one measurement based on the at least one coefficient or a combination thereof,
- wherein the at least one first measurement region is selected amongst the areas of the agricultural field wherein the at least one coefficient is within a first predetermined threshold from a first predetermined value of the coefficient in the agricultural field;
- wherein the at least one second measurement region is selected amongst the areas of the agricultural field wherein the at least one coefficient is within a second predetermined threshold from a second predetermined value of the coefficient in the agricultural field.

2. Method according to claim 1, wherein the at least one first and at least one second measurement regions are further determined based on at least one distance and/or location parameter.

3. A method according to any one of the claims 1 or 2, wherein the at least one first and at least one second measurement regions are chosen such that the distance between the first and second measurement regions is within a predetermined threshold.

4. A method according to any one of the claims 1 to 3, wherein the at least one first and at least one second measurement regions are chosen such that the distance from the first measurement region to a first predetermined location and the distance from the second measurement region to the first predetermined location are within a predetermined first threshold.

5. A method according to any one of the claims 1 to 4, wherein the at least one first and at least one second measurement regions are chosen such that the distance from the first measurement region to a first predetermined location and the distance from the second measurement region to a second predetermined location are within a predetermined first and/or second threshold.

6. A method according to claim 4 or 5, wherein the at least one first and/or the at least one second predetermined locations are at least one of the following: a position predetermined by the users, a position within a track on the agricultural field, a boundary region of the agricultural field, the position of the farmer, the position of a sensor in the agricultural field, the position of a scheduled task on the agricultural field, a previous sampling position on the agricultural field, and an entrance gate to the agricultural field.

7. A method according to any one of the preceding claims, wherein the method further comprises receiving at least a first crop nutrient content and at least a second crop nutrient content from the at least one first and at least one second measurement regions and the method further comprises determining a fertilizer recommendation based on the at least one first and at least one second crop nutrient content.

8. A method according to claim 7, wherein the fertilizer recommendation is determined based on the ratio of the first crop nutrient content and the second crop nutrient content.

9. A method according to claim 8, wherein the fertilization recommendation is further adjusted based on the absolute value of the first or the second crop nutrient content.

10. A method according to any one of claims 7 to 9, wherein the method further comprises carrying out the fertilizer recommendation by means of any suitable agricultural machinery.

11. A method according to any one of claims 1 to 10, wherein the first predetermined value is a value representative of the maximum value of the at least one coefficient or combination thereof and the second predetermined value is a value representative of the median, average or any other measure of central tendency of the coefficient.

12. A system for determining at least two measurement regions for carrying out at least one measurement in each region with a crop nutrient detection device for providing a fertilizer recommendation to a crop, configured to carry out the method according to any one of the claims 1 to 11.

13. A system according to claim 12, comprising a display and an input unit, wherein the system further comprises a graphical user interface, GUI, configured to display at least one first and at least one second measurement regions, wherein the graphical user interface is further configured to receive an input for selecting one from the at least one of the plurality of measurement regions displayed.

14. A computer-readable storage medium comprising instructions which, when executed by a computer system, cause the computer to carry out the method of any one of the claims 1 to 9.

15. A computer program product comprising instructions which, when the program is executed by a computer system, cause the computer to carry out the method of any one of the claims 1 to 9.

Fig. 1

120

110

*Fig. 2a*

10

120

*Fig. 2b*

100

*Fig. 3*

*Fig. 4a*

*Fig. 4b*

*Fig. 5a*

Fig. 5b

Fig. 5c

```
┌─────────────────────────────────┐
│                                 │
│   Agricultural field determination │
│              1000               │
│                                 │
└─────────────────────────────────┘
                 │
                 ▼
┌─────────────────────────────────┐
│                                 │
│        Receive remote data      │
│                                 │
│              1100               │
│                                 │
└─────────────────────────────────┘
                 │
                 ▼
┌─────────────────────────────────┐
│                                 │
│      Remote data processing     │
│                                 │
│              1200               │
│                                 │
└─────────────────────────────────┘
                 │
                 ▼
┌─────────────────────────────────┐
│   First and Second Measurement  │
│     region determination        │
│              1300               │
└─────────────────────────────────┘
```

Fig. 6

Europäisches
Patentamt

European
Patent Office

Office européen
des brevets

# EUROPEAN SEARCH REPORT

Application Number

**EP 22 16 1884**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/122962 A1 (BASF AGRO TRADEMARKS GMBH [DE]) 24 June 2021 (2021-06-24) * the whole document * ----- | 1-15 | INV. A01C21/00 |
| X | CA 2 663 917 C (DYNAGRA CORP [CA]) 30 December 2014 (2014-12-30) * claim 1 * ----- | 1 | |

| | TECHNICAL FIELDS SEARCHED (IPC) |
|---|---|
| | A01C A01B |

The present search report has been drawn up for all claims

| Place of search | Date of completion of the search | Examiner |
|---|---|---|
| The Hague | 25 August 2022 | Weinmüller, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**EP 4 245 112 A1**

## ANNEX TO THE EUROPEAN SEARCH REPORT
## ON EUROPEAN PATENT APPLICATION NO.

**EP 22 16 1884**

This annex lists the patent family members relating to the patent documents cited in  the above-mentioned European search report.
The members are as contained in the European Patent Office EDP file on
The European Patent Office is in no way liable for these particulars which are merely given for the purpose of information.

**25-08-2022**

| Patent document cited in search report | | Publication date | Patent family member(s) | | Publication date |
|---|---|---|---|---|---|
| WO 2021122962 | A1 | 24-06-2021 | AR | 120807 A1 | 16-03-2022 |
| | | | CN | 114828618 A | 29-07-2022 |
| | | | WO | 2021122962 A1 | 24-06-2021 |
| CA 2663917 | C | 30-12-2014 | NONE | | |

EPO FORM P0459

For more details about this annex : see Official Journal of the European Patent Office, No. 12/82

**EP 4 245 112 A1**

**Patent documents cited in the description**

- US 7746452 B2
- US 10175215 B2